Europäisches Patentamt

**European Patent Office**

**Office européen des brevets**

(11) Numéro de publication: **0 275 745 B1**

# (12) FASCICULE DE BREVET EUROPEEN

(45) Date de publication de fascicule du brevet:
**12.02.92**

(21) Numéro de dépôt: **87402834.3**

(22) Date de dépôt: **14.12.87**

(51) Int. Cl.⁵: **C03B 9/38**, C03B 11/12

(54) **Procédé de fabrication d'objets en verre.**

(30) Priorité: **18.12.86 FR 8617759**

(43) Date de publication de la demande:
**27.07.88 Bulletin 88/30**

(45) Mention de la délivrance du brevet:
**12.02.92 Bulletin 92/07**

(84) Etats contractants désignés:
**AT BE CH DE ES FR GB GR IT LI LU NL SE**

(56) Documents cités:
| | |
|---|---|
| EP-A- 0 163 618 | DE-A- 2 401 690 |
| GB-A- 2 011 128 | GB-A- 2 137 980 |
| US-A- 3 171 731 | US-A- 3 416 908 |
| US-A- 3 854 921 | US-A- 3 860 407 |

(73) Titulaire: **L'AIR LIOUIDE, SOCIETE ANONYME POUR L'ETUDE ET L'EXPLOITATION DES PROCEDES GEORGES CLAUDE**
**75, Ouai d'Orsay**
**F-75321 Paris Cédex 07(FR)**

(72) Inventeur: **Virey, Franck**
**14, rue Juge**
**F-75015 Paris(FR)**
Inventeur: **Goumy, Daniel**
**13, bd de Jomardière**
**F-38120 Saint-Egreve(FR)**

(74) Mandataire: **Vesin, Jacques et al**
**L'AIR LIOUIDE, SOCIETE ANONYME POUR L'ETUDE ET L'EXPLOITATION DES PROCEDES GEORGES CLAUDE 75, quai d'Orsay**
**F-75321 Paris Cédex 07(FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

Rank Xerox (UK) Business Services

## Description

La présente invention concerne un procédé de fabrication d'objetsen verre, dans lequel on alimente successivement une pluralité de moules avec du verre à l'état de liquide visqueux, et dans lequel les éléments de paraisons sont formés puis évacués du moule, lesdits moules étant refroidis par soufflage d'un gaz tel que l'air, autour des moules et/ou dans les parois des moules.

Les machines de fabrication d'objets en verre sont alimentées par une paraison de verre en fusion dont la viscosité est telle que cette paraison peut prendre sa forme finale dans un temps donné dépendant du cycle de fabrication. La paraison de verre arrive dans le moule à une température supérieure à la température de travail puis elle est conformée à l'intérieur du moule soit mécaniquement soit par soufflage, puis l'article en verre réalisé est évacué du moule. Lorsque sa température est inférieure à ta température de déformation du verre, il est ensuite placé sur un tapis de transfert qui emmène les articles dans un four de recuisson ou vers toute autre machine intermédiaire.

Pendant son formage, l'objet en verre est mis en contact avec un ou plusieurs moules pour être simultanément conformé et refroidi. Des problèmes apparaissent au niveau de l'objet conformé lorsque le verre lors de son contact avec le moule est trop refroidi ou lorsqu'il est refroidi trop vite ou trop inégalement ou également lorsqu'il n'est pas assez refroidi. On constate généralement qu'un refroidissement trop important ou inégal conduit à l'apparition d'ondulations sur la peau des articles en verre, tandis qu'un refroidissement trop rapide provoque l'apparition de glaçures, c'est-à dire des amorces de fractures.

Enfin un refroidissement insuffisant est source de collage du verre sur les parois du moule et de déformation des articles en verre ainsi réalisés.

La Demanderesse a constaté que ces différents problèmes étaient dûs à un mauvais ajustement des principaux paramètres intervenant dans le refroidissement du verre, c'est-à-dire la température du ou des moules, la température du verre, les temps de contact verre-moule, et/ou la pression de contact verre-moule.

Parmi ces différents problèmes posés, l'invention apporte une solution au problème du refroidissement du moule ainsi qu'au problème des temps de contact verre-moule.

La température des moules varie cycliquement au cours de la fabrication. L'amplitude de ces variations diminue au fur et à mesure que l'on s'éloigne de la surface en contact avec le verre. On a constaté que cette variation de température est sensiblement nulle à la surface externe des moules.

Il est cependant fréquent qu'un certain nombre de perturbations viennent s'ajouter au cours du temps à ces variations cycliques. La Demanderesse a constaté que ces variations étaient dûes à des variations de la température extérieure de l'air et/ou des refroidissements inégaux d'un moule à l'autre et/ou des changements de pression de l'air de refroidissement.

Par conséquent, il apparait que le contrôle de la température du verre et par la même de la température des moules ainsi que le refroidissement de ceux-ci constituent des éléments essentiels si l'on veut éviter que ne se produisent des défauts sur les articles en verre au cours de leur formage.

Il est connu de l'article intitulé "Automatic control of mold cooling wind" publié dans le rapport de la 36th annual conference on glass problems", de réaliser un asservissement de la pression de l'air de refroidissement aux variations de la température de cet air. Ainsi lorsque la température de l'air ambiant augmente en cours de journée, par exemple, on augmente la pression de l'air de refroidissement et donc le débit de celui-ci tandis que lorsque la température ambiante diminue, par exemple l'hiver ou pendant la nuit, on diminue la pression d'air de refroidissement et donc le débit de celui-ci. D'après les résultats indiqués dans cet article, un tel procédé permet d'améliorer le refroidissement des moules en moyenne, au cours du temps, sans cependant permettre de résoudre le problème posé par les différentes perturbations citées plus haut. Dans la technique sus-mentionnée, l'air de refroissement est généralement engendré à l'aide d'une puissante ventilation qui impose une circutation d'air à débit élevé autour de la machine de fabrication.

Il est également connu de réaliser un refroidissement axial des moules à l'aide d'une circulation d'air dans des canalisations internes aux moules, de géométrie appropriée à l'article à fabriquer.

Un tel procédé permet, certes, une amélioration des rendements de fabrication dans certains cas, dans la mesure où il permet éventuellement une fabrication comportant moins de défauts, mais il comporte l'inconvénient de nécessiter des moules particuliers, dont la géométrie des canalisations doit être adaptée à chaque moule et donc à chaque objet à réaliser. Ceci augmente encore le coût de fabrication des moules qui est déjà élevé, et ceci nécessite de plus une mise au point pour chacun de ces moules afin de réaliser une bonne optimisation du refroidissement.

On constate de plus que les procédés analysés ci-dessus souffrent d'une certaine inertie dûe essentiellement aux limitations des débits d'air compte tenu de la puissance limitée du ou des ventilateurs ainsi que des pertes de charge. Des problèmes d'inertie thermique, s'ajoutant à des problèmes d'entretien, d'encombrement et de corrosion, résultent également du procédé à échange de chaleur indirect décrit dans le US-A-3 416 908.

La présente invention se propose notamment de contrôler la température des moules, les pics de température interne des moules, de faire varier la vitesse de refroidissement des moules au cours d'un même cycle par une régulation très rapide de la température de l'air ou du fluide de refroidissement. Elle se propose également de contrôler le refroidissement des moules, qui peut être identique ou différent d'un cycle à l'autre, identique ou différent d'un moule à l'autre dans une machine de fabrication comportant une pluralité de sections.

Ainsi l'invention propose un procédé du type précité qui est caractérisé en ce que l'on refroidit l'air de ventilation soufflé autour et/ou dans les parois du moule par injection directe du gaz froid dans l'air de ventilation, de manière continue ou séquentielle, de manière à maintenir sensiblement constante, au moins pendant des périodes de temps prédéterminées, la température de l'air soufflé autour et/ou dans les parois du moule, quelle que soit la température ambiante.

D'autres caractéristiques de l'invention sont décrites dans les sous-revendications 2 à 15.

L'invention sera mieux comprise à l'aide des exemples de réalisations suivants, donnés à titre non limitatifs, conjointement avec les figures qui représentent :

- la figure 1, un exemple de mise en oeuvre de l'invention dans lequel on contrôle la température de l'air de ventilation des moules,
- la figure 2, une seconde variante de réalisation de l'invention dans laquelle on contrôle la température de l'air de ventilation des moules au niveau de chacun de ceux-ci,
- la figure 3, une variante de réalisation de la figure 2 dans laquelle la régulation de température se fait au niveau de la paroi du moule,
- la figure 4, une variante de réalisation particulièrement avantageuse de l'invention dans laquelle on fait varier la puissance, frigorifique pendant la durée d'un cycle de formage d'un objet en verre,
- la figure 5, l'évolution dans le temps de la température du moule et celle de la sonde de température de l'air de ventilation dans la variante de réalisation de la figure 4,
- la figure 6, une autre variante de réalisation de la figure 5.

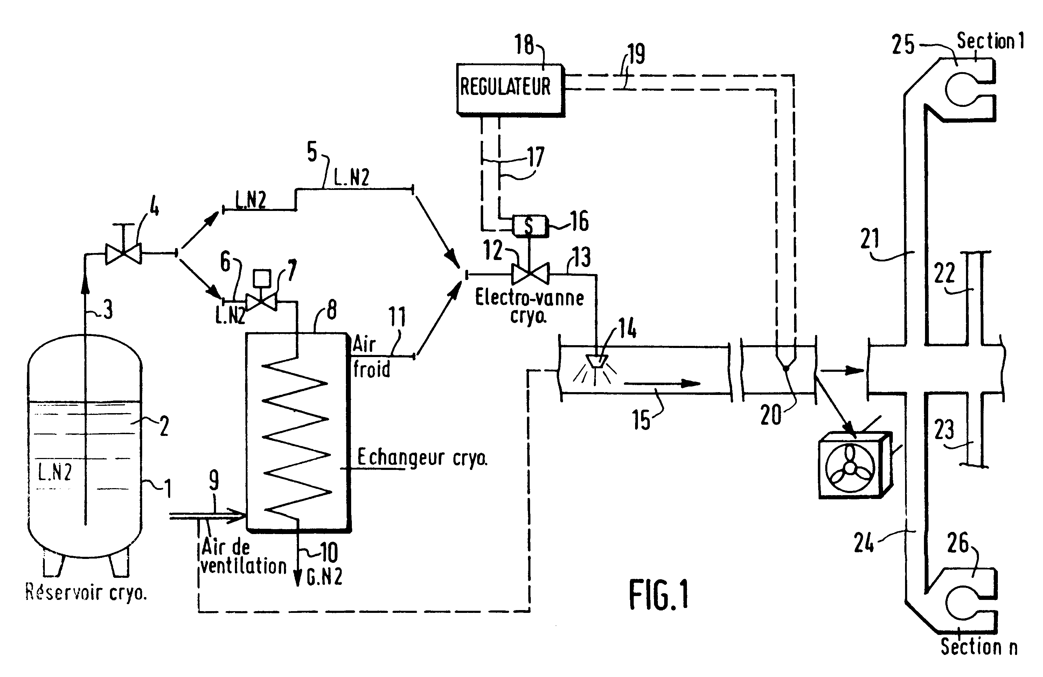

Sur la figure 1, est représenté un exemple de réalisation de l'invention pour contrôler l'air de ventilation des moules. Sur cette figure, le réservoir cryogénique 1 contenant un liquide cryogénique 2 par exemple de l'azote liquide, est relié par la canalisation 3 et la vanne 4 soit, selon une première variante, par la canalisation 5 directement à l'électrovanne cryogénique 12, soit, selon une seconde variante, à l'électrovanne cryogénique 7 dont la sortie est reliée à un échangeur de chaleur 8 délivrant dans l'atmosphère à sa sortie inférieure (sur la figure) le gaz vaporisé, tandis que de l'air de ventilation 9, issu par exemple d'un générateur d'air comprimé, est introduit à la base de l'échangeur cryogénique 8 et s'échappe dans la partie supérieure de celui-ci par la canalisation 11 qui le conduit à l'électrovanne cryogénique 12. Celle-ci est reliée par la canalisation 13 à une buse de vaporisation 14 qui vaporise le gaz liquéfié ou injecte l'air refroidi (ou un autre gaz porteur de frigories) dans la canalisation 15 d'air de ventilation. Celle-ci se sépare en une pluralité de canalisations 21, 22, 23, 24 etc..., chacune d'entre elles étant reliée à un moule ou à une section de la machine de moulage (par section on entend dans les machines de ce type, l'ensemble des moules ébaucheur et finisseur). Selon une autre variante de réalisation, l'air de ventilation refroidi est envoyé dans le ventilateur 24, qui ventile l'extérieur des moules tels que 25, 26 (respectivement reliés sur la figure aux canalisations 21, 24 connectées sur la canalisation centrale d'air de refroidissement 15). Bien entendu selon la variante de réalisation de la figure 1 il est possible soit d'injecter l'air refroidi par la canalisation 15 dans chacun des moules tels que 25 ou 26, soit d'injecter cet air dans le ventilateur 24, mais il est également possible de réaliser ces deux opérations de refroidissement simultanément (refroidissement simultanément de l'air ventilé par le ventilateur autour des moules et de l'air ventilé à l'intérieur de chaque moule).

La solution décrite sur cette figure concerne la mise en oeuvre la plus simple de l'invention. Elle permet de résoudre le problème lié aux variations de température entre le jour et la nuit, l'été et l'hiver, etc... et d'augmenter le rendement de la machine.

Dans la mise en oeuvre de cette solution, il existe deux possibilités. Selon une première possibilité, la totalité de l'air de ventilation d'une ou de plusieurs machines est traité dans un échangeur alimenté par un fluide cryogénique tel que l'azote liquide, l'hydrogène liquide, l'anhydride carbonique liquide et l'oxygène liquide, l'hélium liquide, l'argon liquide etc.... Selon cette première possibilité, la sonde de température 20 mesure la température de l'air de ventilation et le régulateur 18 commande alors l'ouverture ou la fermeture de la vanne 16 afin d'injecter de l'air froid issu de l'échangeur 8 à une température prédéterminée. Les dimensions de cet échangeur seront adaptées au débit voulu. Une autre possibilité consiste à injecter un fluide cryogénique tel que l'azote liquide, l'anhydride carbonique liquide, l'hélium liquide, etc... dans la canalisation d'air de ventilation en amont de la ou des machines, la température étant maintenue par la mise en place d'une sonde de température en aval de l'injection, après homogénéisation du mélange, pilotant par le régulateur 18 les injections de fluides cryogéniques. La température est mesurée par la sonde de température 20 placée en un point quelconque approprié de la canalisation 15, à une distance plus ou moins grande de la buse d'injection 14, cette sonde de température étant reliée par les connexions 19 au régulateur 18 qui lorsque la température de l'air de ventilation de la canalisation 15 est supérieure à la température de consigne, engendre un signal sur les connexions électriques 17 pour commander l'ouverture de l'électrovanne cryogénique 12 par l'intermédiaire de son dispositif de commande 16. Le régulateur 18 peut fonctionner selon deux modes distincts : un premier mode consiste à mesurer à intervalles réguliers, par échantillonage la température de l'air de ventilation dans la canalisation 15. Si celle-ci est inférieure ou égale à la température de consigne, aucun signal de commande est envoyé à l'électrovanne 12. Si celle-ci est supérieure, on ouvre cette vanne, de débit prédéterminé connu, pendant un intervalle de temps fixe, inférieur à la période de l'échantillonage. Puis on recommence à chaque mesure d'échantillonage. Un second mode consiste à réaliser une mesure quasi-continue de la température de l'air de ventilation, par un échantillonage à fréquence beaucoup plus élevée que dans le premier mode. Lorsque la température de l'air ventilé est supérieure à celle de la consigne, on ouvre la vanne cryogénique 12 qui débite le fluide adéquat jusqu'à ce que la température mesurée par la sonde 20 devienne inférieure ou égale à la valeur de consigne. La vanne cryogénique 12 est alors fermée.

Bien entendu, il est églament possible de mettre en oeuvre des régulations de type "proportionnel" ou du type P.I.D. à l'aide de vannes adaptées, mais, ces solutions s'avèrent souvent trop coûteuses pour la rentabilité du procédé, ou délicates de mise en oeuvre. Inversement, on peut également mettre en oeuvres des solutions beaucoup plus simple en utilisant une sonde de température 20, 120 du type bilame qui ouvre l'alimentation en courant électrique de l'électrovanne 12 lorsque la température mesurée est supérieure à la température de consigne, ce qui commande l'ouverture de la vanne cryogénique 12, et coupe l'alimentation électrique de l'électrovanne 12 lorsque la température mesurée est inférieure ou égale à la température de consigne, ce qui commande la fermeture de l'électrovanne 12.

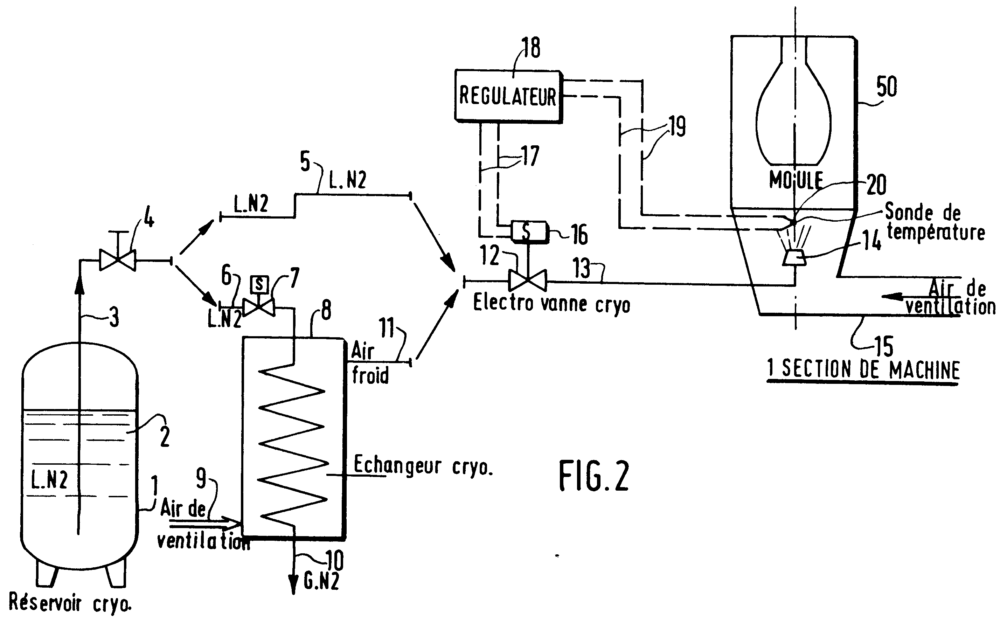

Sur la figure 2 est représentée une variante de réalisation de l'invention qui peut être utilisée seule ou en combinaison avec la variante de réalisation de la figure 1. Sur cette figure 2, les mêmes éléments que ceux de la figure 1 portent les mêmes références. L'air froid issu de l'échangeur cryogénique 8 ou le gaz liquéfié arrivant par la canalisation 5, traverse l'électrovanne cryogénique 12 sous la commande du régulateur 18 qui reçoit une information de température par la sonde de température 20 qui est placée dans le cas présent à proximité de la buse d'injection cryogénique 14 elle même placée dans la canalisation d'amenée d'air de ventilation aux moules, juste en dessous ou à proximité de ce moule. La sonde de température est également à proximité de la buse d'injection 14 et du moule 50.

Le fait de contrôler le niveau de température de la totalité de l'air de ventilation au cours du temps tel qu'exposé en regard de la figure 1 permet d'augmenter le rendement de la machine. Cependant dans certain cas, on retrouve au niveau de chaque section d'une machine des écarts de température de moules dûs par exemple à des variations de perte de charge (longeurs de canalisation différentes, encrassement des orifices au niveau des moules etc...), là où les sections travaillant en de moins bonnes conditions vont diminuer le rendement de la machine. La variante de réalisation exposée sur cette figure 2 permet de contrôler la température au niveau de chaque moule c'est-à-dire au niveau de chaque section d'une machine.

Selon une possibilité de cette variante on peut injecter un fluide cryogénique tel que l'azote liquide, l'anhydride carbonique liquide, l'hélium liquide, etc... dans le circuit d'air de ventilation juste en amont du moule, la sonde de température placée à proximité de l'injection cryogénique, après homogéinisation de la température, pilotant, par l'intermédiaire du régulateur 18, les cycles d'ouverture et de fermeture de la vanne cryogénique 12.

Le complément frigorifique nécessaire peut être obtenu en injectant un gaz, par exemple de l'air, préalablement refroidi dans un échangeur cryogénique alimenté par un fluide tel que l'azote liquide, l'argon liquide, l'anhydride carbonique liquide, l'oxygène liquide, l'hydrogène liquide, l'hélium liquide etc... Le contrôle de la température se fera de la même manière que celle décrite ci-dessus. Une telle solution présente l'avantage de pouvoir utiliser un fluide de refroidissement tel que l'oxygène ou l'hydrogène.

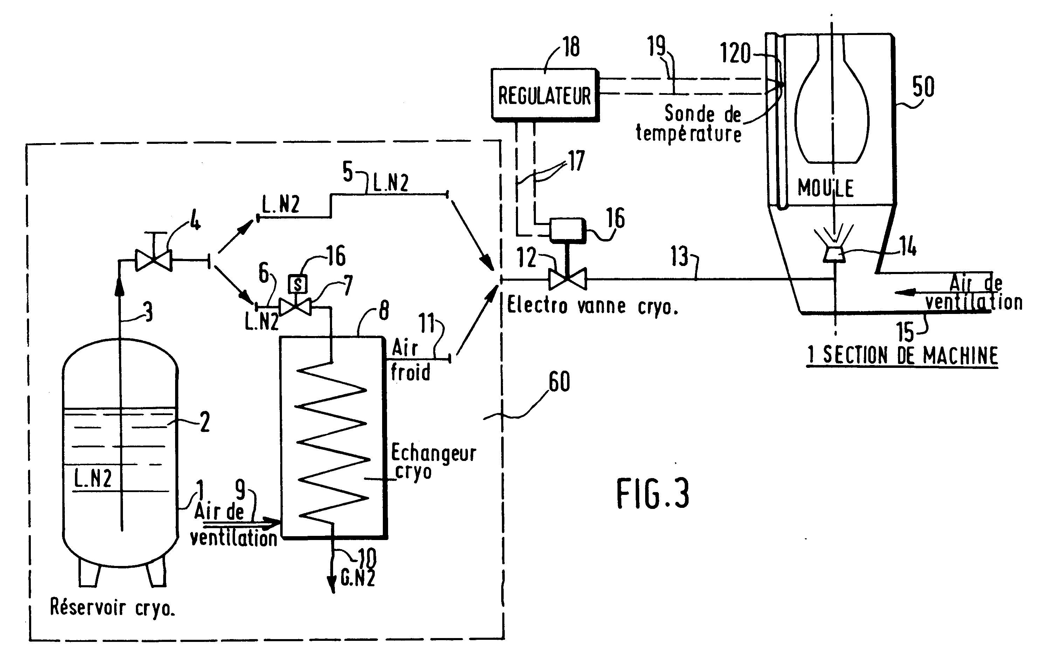

L'exemple de réalisation de la figure 3 représente une autre variante de réalisation de l'invention, dans laquelle les mêmes éléments que les figures précédentes portent les mêmes références. Dans cette réalisation, la sonde de température n'est plus placée à proximité de l'injection de fluide cryogénique 14 mais se trouve placée dans les parois du moule 50. Cette sonde 120 est reliée comme précédemment au régulateur 18 par les lignes électriques 19.

Une telle variante de réalisation permet d'augmenter la production des machines. En effet, selon cette variante, on abaisse avec une vitesse optimale la température des moules à une valeur telle que les temps de refroidissement sont réduits, sans modifier la qualité de l'article.

Les essais réalisés par la Demanderesse ont montré qu'il était possible d'augmenter la production d'au moins 5 %, pour un abaissement de $10°C$ de la température de l'air de ventilation en sortie du moule, sans pour cela diminuer le rendement de la machine.

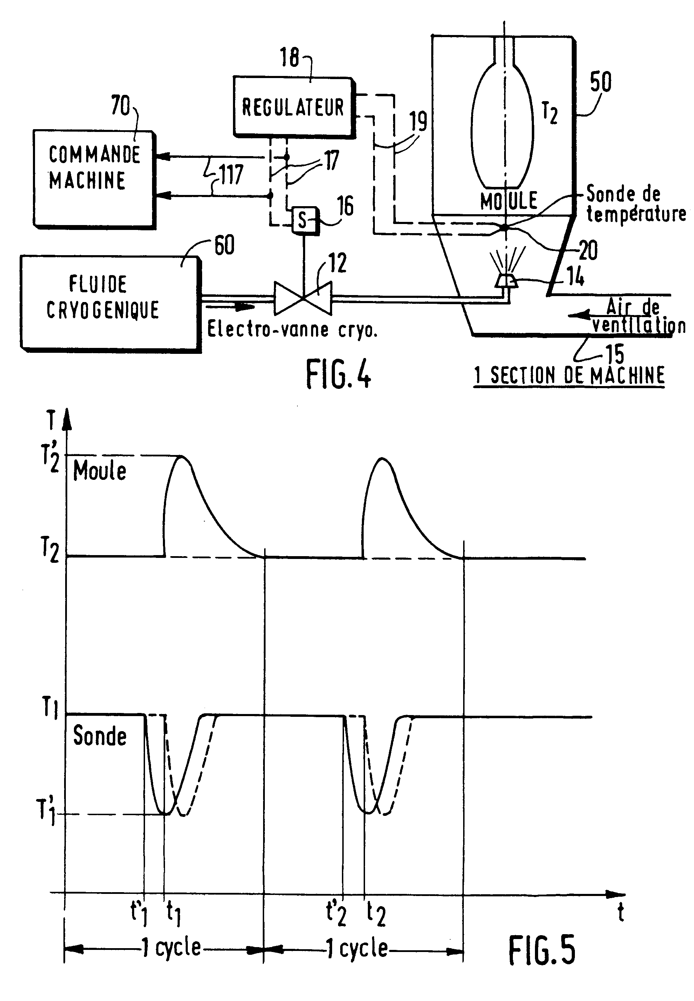

Les figures 4 et 5 permettent d'expliciter une variante particulièrement avantageuse de l'invention, selon laquelle on peut programmer la puissance frigorifique injectée dans le moule afin d'améliorer la productivité et la qualité de l'article de verre réalisé. Sur ces figures, les mêmes éléments que ceux des figures précédentes portent les mêmes références. Le fluide cryogénique ou l'air refroidi sont créés de la même façon que précédemment par l'ensemble représenté par la référence 60. Dans cet exemple de réalisation, la sonde de température est placée comme dans le cas de la figure 2 à proximité de la buse d'injection 14 de fluide cryogénique ou d'air refroidi, en dessous du moule 50. Les lignes électriques 17 de connexion du régulateur aux moyens de commande 16 de l'électrovanne cryogénique 12 sont reliées également aux lignes électriques 117 qui sont connectées à des moyens de commande de la machine de production 70. Le fonctionnement des dispositifs de la figure 4 sera mieux compris à l'aide de la figure 5 sur laquellle on voit dans la partie supérieure une courbe représentant les variations de température T2 des parois du moule en fonction du temps et dans la partie inférieure de la courbe une représentation des variations de la température T1 mesurée par la sonde 20. Avant la coulée d'un élément de paraison dans le moule, la température de celui-ci est à une valeur T2. Cette valeur croît brusquement lorsque le verre à l'état liquide visqueux arrive dans le moule, jusqu'à la valeur T'2, puis décroît un peu plus lentement jusqu'à ce que l'élément en verre soit extrait de moule, ce qui représente un cycle sur la figure 5.

Selon une première variante de réalisation, les moyens de commandes machine 70 déclenchent lors de la coulée de l'élément de paraison à l'instant t1 l'ouverture de l'électrovanne cryogénique 12 ce qui permet l'injection d'une quantité prédéterminée de fluide cryogénique ou de gaz froid par la buse 14, ce qui fait chuter la température de la sonde de la valeur T1 à la valeur T'1, nettement inférieure (de l'ordre d'environ $50°C$ à $150°C$). Plus l'écart de température est important, plus on abaisse rapidement la température. (On pourra, par exemple, obtenir une température du moule T2 sensiblement constante - en pointillés sur la figure 5 supérieure). Puis la température de la sonde remonte rapidement à la valeur T1. On remarque que les variations de température de la sonde et du moule s'effectuent sensiblement pendant le même laps de temps.

Selon un variante préférentielle de réalisation de cet exemple de la figure 4, on anticipe l'arrivée de l'élément de paraison dans le moule en injectant à l'instant t'1, antérieur à l'instant t1 du liquide cryogénique ou de l'air froid par la buse 14, l'électrovanne cryogénique 12 ayant son ouverture commandée par les moyens de commandes machine 70. Comme précédemment, on injecte une quantité prédéterminée de liquide cryogénique ou de gaz froid. En pratique, ceci signifie que l'on ouvre l'électrovanne cryogénique pendant un intervalle de temps prédéterminé, afin de délivrer une quantité prédéterminée de frigories.

Pendant un cycle de production, la température du moule ne reste pas constante. En effet, il se produit une brusque élévation de température au moment où le verre entre en contact avec l'empreinte du moule pendant la phase de formage et de refroidissement de l'objet en verre. Selon une variante de l'invention, on s'est rendu compte que ce pic de température, qui était inévitable avant la présente invention, doit être d'une amplitude et d'une période aussi faibles que possible car il limite la qualité c'est-à-dire les propriétés mécaniques de l'objet en verre.

Selon l'invention, l'amélioration des paramètres de rendement de production et qualité du produit fini est réalisé par injection d'une puissance frigorifique variable pendant le temps d'un cycle (voir figure 5), la température du moule étant maintenue optimale et constante pendant toute la durée du cycle, à une valeur T2. Cette opération est assurée par le régulateur 18 et la sonde de température 20. Ces deux éléments permettent de commander l'ouverture et la fermeture de l'électrovanne cryogénique 12 par l'intermédiaire des éléments 16 et 17. Pour neutraliser les élévations de température du moule pendant la phase de formage, les moyens de commandes de machine 70 engendrent un signal de commande à l'instant t1 engendrant l'ouverture de la vanne cryogénique pour une durée fonction de la nature de l'article à réaliser (selon sa taille, sa forme etc...).

L'instant t1 peut correspondre à l'instant d'arrivée du verre en contact avec le moule (selon la variante en pointillés sur la figure 5) mais il peut également être antérieur (t'1). permettant ainsi de tenir compte des constantes de temps dûes à la nature des matériaux en présence (moule-verre).

Cette fonction est réalisée sur la figure 4 par une seule vanne 12 mais dans certains cas il sera nécessaire de séparer les différentes fonctions à l'aide de plusieurs vannes. Bein entendu, le dispositif de la figure 4 est identique pour chacun des moules et/ou des sections de la machine, avec un décalage dans le temps de la commande.

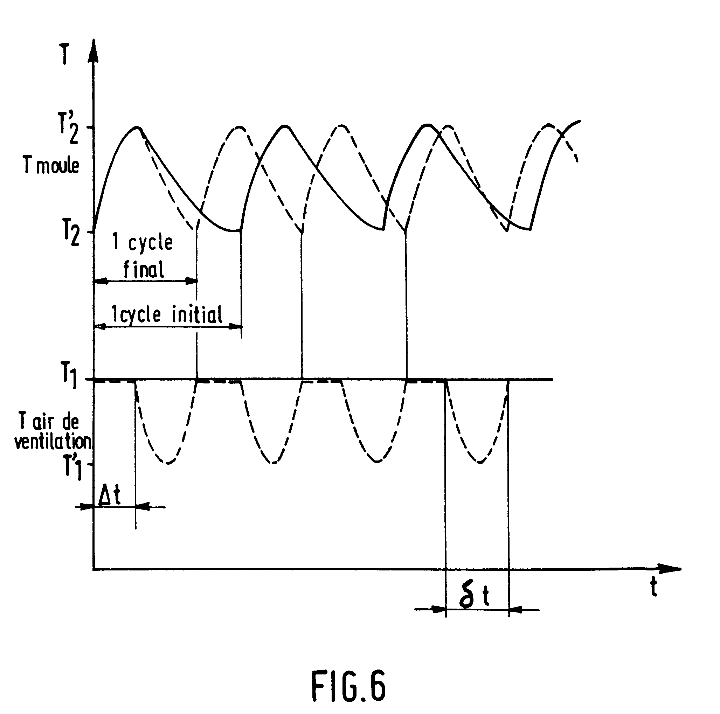

Selon une autre variante de réalisation représentée sur la figure 6, on peut également augmenter la vitesse de refroidissement des moules lorsque ceux-ci ne sont pas en contact avec le verre, afin de les ramener plus rapidement aux conditions initiales de température T2, diminuant ainsi les temps d'attente qui ralentissent les cadences de production. Au temps t0 le moule est à la température T'2 et l'article en verre est évacué, une injection de frigories est programmée par les moyens de commande 70 pendant un temps $\delta$ t et permet ainsi au moule de revenir plus rapidement à la température initiale T2. Il sera donc possible de diminuer le temps de cycle total et améliorer ainsi la productivité. Lorsqu'on souhaite diminuer $\delta$ t, on abaissera la température T'1, c'est à dire que l'on augmentera la puissance frigorifique injectée. L'augmentation de cette puissance injectée sera cependant limitée par les performances de la machine. Les traits en continu sur cette figure concernent le cycle initial (sous injection cryogénique), tandis que les traits en pointillés concernent le cycle final, (avec injection cryogénique) c'est à dire avec augmentation de productivé. Sur cette figure 6, $\Delta$ t représente l'intervalle de temps de contact verre/moule tandis que $\delta$ t représente l'intervalle de temps pendant lequel on peut injecter le fluide cryogénique.

Il est également possible, comme précédemment (figure 5) d'anticiper l'injection cryogénique pour tenir compte des problèmes de diffusivité thermique liés aux matériaux du moule.

Bien entendu, le refroidissement de l'air de ventilation (dans toutes les variantes ci-dessus) peut s'effectuer, de manière connue en soi, par des moyens mécaniques ou thermodynamiques de refroidissement (groupe frigorifique, échangeurs de chaleur air, eau, etc...).

**Revendications**

1. Procédé de fabrication d'objets en verre dans lequel on alimente successivement une pluralité de moules (25, 26; 50) avec du verre à l'état de liquide visqueux, et dans lequel les éléments de paraisons sont formés puis évacués du moule, lesdits moules étant refroidis par soufflage d'un gaz tel que l'air, autour des moules et/ou dans les parois des moules, caractérisé en ce que l'on refroidit l'air de ventilation soufflé autour et/ou dans les parois du moule par injection directe (en 14) de gaz froid dans l'air de ventilation, de manière continue ou séquentielle, de manière à maintenir sensiblement constante, au moins pendant des périodes de temps prédéterminées, la température de l'air soufflé autour et/ou dans les parois du moule, quelle que soit la température ambiante.

2. Procédé selon la revendication 1, caractérisé en ce que l'on mesure (en 20; 120) la température de l'air avant refroidissement, que l'on compare à une température de consigne constante ou variable au cours d'un cycle, constante ou variable en moyenne dans le temps sur un grand nombre de cycles, la différence entre la température mesurée et la température de consigne, lorsqu'elle est positive, engendrant ladite injection de manière à abaisser si nécessaire la température de l'air soufflé jusqu'aux environs de la température de consigne.

3. Procédé selon la revendication 1 ou 2, caractérisé en ce que le gaz froid est un fluide cryogénique.

4. Procédé selon l'une des revendications 1 à 3, caractérisé en ce que l'on refroidit l'air de ventilation de l'ensemble des moules (25, 26; 50) à la même température.

5. Procédé selon l'une des revendications 1 à 4, caractérisé en ce que l'air de ventilation est amené autour et/ou dans les parois de chaque moule ou ensemble de moules (50) par des canalisations séparées (15), en ce que l'on mesure la température au voisinage de chaque moule ou ensemble de moules, en ce que l'on compare la température mesurée à la température de consigne, et en ce que l'on injecte, si nécessaire, ledit gaz froid dans l'air de ventilation au niveau de chaque canalisation.

6. Procédé selon la revendication 5, caractérisé en ce que les températures de consigne au niveau de chaque moule ou ensemble de moules (50) sont identiques.

7. Procédé selon la revendication 5, caractérisé en ce que les températures de consigne au niveau de chaque moule ou ensemble de moules (50) sont différentes.

8. Procédé selon l'une des revendications 5 à 7, caractérisé en ce que la mesure de température (en 20) au voisinage de chaque moule ou ensemble de moules (50) s'effectue en mesurant la température de l'air de ventilation juste avant son injection autour et/ou dans la paroi du moule ou ensemble de moules.

**9.** Procédé selon l'une des revendications 5 à 7, caractérisé en ce que la mesure de température (en 120) au voisinage de chaque moule ou ensemble de moules (50) s'effectue en mesurant la température des parois du moule ou de l'un au moins des moules de l'ensemble de moules.

**10.** Procédé selon l'une des revendications 1 à 9, caractérisé en ce que la température de l'air de ventilation est maintenue sensiblement constante dans le temps.

**11.** Procédé selon l'une des revendications 1 à 9, caractérisé en ce que la température de l'air de ventilation est refroidie entre sensiblement l'instant où l'élément conformé de paraison est évacué du moule et l'instant où l'élément de paraison suivant pénètre dans le moule, tandis que la température de l'air de ventilation est maintenue sensiblement constante entre l'instant où l'élément de paraison suivant pénètre dans le moule et l'instant où cet élément suivant conformé est évacué du moule.

**12.** Procédé selon la revendication 11, caractérisé en ce que l'air de ventilation est refroidi quelques instants avant l'évacuation de l'élément de paraison dans le moule.

**13.** Procédé selon l'une des revendications 1 à 12, caractérisé en ce que la température de l'air de ventilation est abaissée entre sensiblement l'instant où l'élément conformé de paraison est évacué du moule et l'instant où l'élément de paraison suivant pénètre dans la moule.

**14.** Procédé selon la revendication 13, caractérisé en ce que la température de l'air de ventilation est maintenue sensiblement constante entre l'instant où l'élément de paraison suivant pénètre dans le moule et l'instant où cet élément suivant conformé est évacué du moule.

**15.** Procédé selon la revendication 13 ou 14, caractérisé en ce que l'air de ventilation est refroidi quelques instants avant l'évacuation de l'élément de paraison du moule.

## Claims

**1.** Process for manufacturing glass objects, in which a plurality of moulds (25, 26; 50) is successively supplied with glass in the viscous liquid state, and in which the parison elements are formed and then taken out of the mould, the said moulds being cooled by blowing a gas such as air around the moulds and/or into the walls of the moulds, **characterised in that** the ventilation air blown around and/or into the walls of the mould is cooled by the direct injection (at 14) of cold gas into the ventilation air, in continuous or sequential manner, so as to maintain the temperature of the air blown around and/or into the walls of the mould substantially constant, at least during predetermined periods of time, whatever the ambient temperature.

**2.** Process according to claim 1, **characterised in that** the temperature of the air is measured (at 20; 120) before cooling, which temperature is compared with a set-point temperature which is constant or variable in the course of a cycle, constant or variable on an average in time over a large number of cycles, the difference between the measured temperature and the set-point temperature, when it is positive, bringing about the said injection so as to reduce, if necessary, the temperature of the blown air to the region of the set-point temperature.

**3.** Process according to claim 1 or 2, **characterised in that** the cold gas is a cryogenic fluid.

**4.** Process according to one of claims 1 to 3, **characterised in that** the ventilation air of the assembly of moulds (25, 26; 50) is cooled to the same temperature.

**5.** Process according to one of claims 1 to 4, **characterised in that** the ventilation air is brought around and/or into the walls of each mould or assembly of moulds (50) by separate pipes (15), and in that the temperature is measured in the region of each mould or assembly of moulds, and in that the measured temperature is compared with the set-point temperature, and in that, if necessary, the said cold gas is injected into the ventilation air at each pipe.

**6.** Process according to claim 5, **characterised in that** the set-point temperatures at each mould or assembly of moulds (50) are the same.

**7.** Process according to claim 5, **characterised in that** the set-point temperatures at each mould or assembly of moulds (50) are different.

8. Process according to one of claims 5 to 7, **characterised in that** the measurement of temperature (at 20) in the region of each mould or assembly of moulds (50) is carried out by measuring the temperature of the ventilation air just before it is injected around and/or into the wall of the mould or assembly of moulds.

9. Process according to one of claims 5 to 7, **characterised in that** the measurement of temperature (at 120) in the region of each mould or assembly of moulds (50) is carried out by measuring the temperature of the walls of the mould or of at least one of the assembly of moulds.

10. Process according to one of claims 1 to 9, **characterised in that** the temperature of the ventilation air is maintained substantially constant in time.

11. Process according to one of claims 1 to 9, **characterised in that** the temperature of the ventilation air is cooled between substantially the moment when the formed parison element is taken out of the mould and the moment when the next parison element enters the mould, while the temperature of the ventilation air is maintained substantially constant between the moment when the next parison element enters the mould and the moment when this next formed element is taken out of the mould.

12. Process according to claim 11, **characterised in that** the ventilation air is cooled a few moments before the parison element in the mould is taken out.

13. Process according to one of claims 1 to 12, **characterised in that** the temperature of the ventilation air is reduced between substantially the moment when the formed parison element is taken out of the mould and the moment when the next parison element enters the mould.

14. Process according to claim 13, **characterised in that** the temperature of the ventilation air is maintained substantially constant between the moment when the next parison element enters the mould and the moment when this next formed element is taken out of the mould.

15. Process according to claim 13 or 14, **characterised in that** the ventilation air is cooled a few moments before the parison element is taken out of the mould.

**Patentansprüche**

1. Verfahren zur Herstellung von Glasgegenständen, bei dem man aufeinanderfolgend eine Vielzahl von Formen (25, 26; 50) mit Glas in flüssig-viskosem Zustand speist und bei dem die Glasmassenelemente geformt und dann der Form entnommen werden, wobei die Formen gekühlt werden durch Blasen eines Gases, wie z.B. Luft, um die Formen herum und/oder auf die Wände der Formen, dadurch gekennzeichnet, daß man die Belüftungsluft, die um und/oder auf die Wände der Form eingeblasen wird, durch direktes Einspritzen (bei 14) von kaltem Gas in die Belüftungsluft in kontinuierlicher oder sequentieller Weise kühlt, um mindestens während vorbestimmter Zeiten die Temperatur der um und/oder auf die Wände der Form eingeblasenen Luft unabhängig von der Umgebungstemperatur im wesentlich konstant zu halten.

2. Verfahren nach Anspruch 1, dadurch gekennzeichnet, daß man (bei 20; 120) die Temperatur der Luft vor dem Kühlen mißt, sie mit einer im Verlaufe eines Zyklus konstanten oder variablen Solltemperatur vergleicht, konstant oder variabel im Mittel in der Zeit einer großen Anzahl von Zyklen, und die Differenz zwischen der Isttemperatur und der Solltemperatur, wenn sie positiv ist, die Einspritzung derart erzeugt, daß die Temperatur der eingeblasenen Luft notwendigenfalls abgesenkt wird bis auf die Nachbarschaft der Solltemperatur.

3. Verfahren nach Anspruch 1 oder 2, dadurch gekennzeichnet, daß das kalte Gas ein Tiefsttemperaturfließmittel ist.

4. Verfahren nach einem der Ansprüche 1 bis 3, dadurch gekennzeichnet, daß man die Belüftungsluft der Gesamtheit der Formen (25, 26; 50) auf dieselbe Temperatur kühlt.

5. Verfahren nach einem der Ansprüche 1 bis 4, dadurch gekennzeichnet, daß die Belüftungsluft um und/oder auf die Wände jeder Form oder Gesamtheit der Formen (50) durch getrennte Leitungen (15) geführt wird, daß man die Temperatur in der Nachbarschaft jeder Form oder Gesamtheit von Formen mißt, daß man die Isttemperatur mit der Solltemperatur vergleicht und daß man notwendigenfalls das kalte Gas in die Belüftungsluft an jeder Leitung einspritzt.

6. Verfahren nach Anspruch 5, dadurch gekennzeichnet, daß die Solltemperaturen an jeder Form oder Gesamtheit von Formen (50) identisch sind.

7. Verfahren nach Anspruch 5, dadurch gekennzeichnet, daß die Solltemperaturen an jeder Form oder Gesamtheit von Formen (50) unterschiedlich sind.

8. Verfahren nach einem der Ansprüche 5 bis 7, dadurch gekennzeichnet, daß das Messen der Temperatur (bei 20) in der Nachbarschaft jeder Form oder Gesamtheit von Formen (50) dadurch erfolgt, daß man die Temperatur der Belüftungsluft unmittelbar vor ihrem Einspritzen um und/oder auf die Wand der Form oder Gesamtheit der Formen mißt.

9. Verfahren nach einem der Ansprüche 5 bis 7, dadurch gekennzeichnet, daß das Messen der Temperatur (bei 120) in der Nachbarschaft jeder Form oder Gesamtheit der Formen (50) dadurch erfolgt, daß man die Temperatur der Wände der Form oder mindestens einer Form aus der Gesamtheit der Formen mißt.

10. Verfahren nach einem der Ansprüche 1 bis 9, dadurch gekennzeichnet, daß die Temperatur der Belüftungsluft in der Zeit im wesentlichen konstant gehalten wird.

11. Verfahren nach einem der Ansprüche 1 bis 9, dadurch gekennzeichnet, daß die Temperatur der Belüftungsluft zwischen im wesentlichen demjenigen Augenblick, in welchem das aus der Glasmasse gebildete Element aus der Form abgezogen wird, und demjenigen Augenblick gekühlt wird, in welchem das folgende Glasmassenelement in die Form dringt, während die Temperatur der Belüftungsluft zwischen demjenigen Augenblick, in welchem das folgende Glasmassenelement in die Form dringt, und demjenigen Augenblick, in welchem dieses folgende, gebildete Element aus der Form entnommen wird, im wesentlichen konstant gehalten wird.

12. Verfahren nach Anspruch 11, dadurch gekennzeichnet, daß die Belüftungsluft einige Augenblicke vor der Entnahme des in der Form befindlichen Glasmassenelementes gekühlt wird.

13. Verfahren nach einem der Ansprüche 1 bis 12, dadurch gekennzeichnet, daß die Temperatur der Belüftungsluft zwischen im wesentlichen demjenigen Augenblick, in welchem das aus der Glasmasse gebildete Element aus der Form abgezogen wird, und demjenigen Augenblick abgesenkt wird, in welchem das folgende Glasmassenelement in die Form dringt.

14. Verfahren nach Anspruch 13, dadurch gekennzeichnet, daß die Temperatur der Belüftungsluft zwischen demjenigen Augenblick, in welchem das folgende Glasmassenelement in die Form dringt, und demjenigen Augenblick, in welchem dieses folgende, gebildete Element aus der Form abgenommen wird, im wesentlichen konstant gehalten wird.

15. Verfahren nach Anspruch 13 oder 14, dadurch gekennzeichnet, daß die Belüftungsluft einige Augenblicke vor dem Abziehen des Glasmassenelementes aus der Form gekühlt wird.

FIG.1

Section 1

25

21

22

23

24

26

Section n

20

19

15

14

18 REGULATEUR

17

16

13

12 Electro-vanne cryo.

5 L.N2

L.N2

7

6 L.N2

8 Air froid

Echangeur cryo.

10 G.N2

9 Air de ventilation

11

4

3

2

1

L.N2

Réservoir cryo.

FIG.2

FIG.3

REGULATEUR 18

19 Sonde de température

120

50

MOULE

17

16

12 Electro vanne cryo.

13

14

Air de ventilation

15

1 SECTION DE MACHINE

5 L.N2

4

L.N2

L.N2 6

16 S

7

8

11 Air froid

3

60

2

L.N2

1 9 Air de ventilation

Echangeur cryo

10 G.N2

Réservoir cryo.

EP 0 275 745 B1

12

FIG.4

- 70 COMMANDE MACHINE
- 18 REGULATEUR
- 117
- 17
- 19
- 16 S
- 60 FLUIDE CRYOGENIQUE
- 12
- Electro-vanne cryo.
- 50
- $T_2$ MOULE
- Sonde de température
- 20
- 14
- Air de ventilation
- 15
- 1 SECTION DE MACHINE

FIG.5

- T
- $T_2'$ Moule
- $T_2$
- $T_1$
- Sonde
- $T_1'$
- $t_1'$ $t_1$
- $t_2'$ $t_2$
- 1 cycle
- 1 cycle
- t

FIG.6